# EUROPÄISCHE PATENTSCHRIFT

(11) **EP 2 258 010 B1**
(45) Veröffentlichungstag und Bekanntmachung des Hinweises auf die Patenterteilung: **29.08.2012**
(21) Anmeldenummer: 09728944.1
(22) Anmeldetag: 01.04.2009
(51) Int. Cl.: H01M 2/08, H01M 2/04, H01M 2/02

(54) **KNOPFZELLE UND VERFAHREN ZU IHRER HERSTELLUNG**
BUTTON CELL AND METHOD FOR THE PRODUCTION THEREOF
PILE BOUTON ET SA PROCÉDÉ DE FABRICATION

(30) Priorität: 03.04.2008 DE 102008018172
(43) Veröffentlichungstag der Anmeldung: 08.12.2010
(73) Patentinhaber: VARTA Microbattery GmbH, 73479 Ellwangen (DE)
(72) Erfinder: PYTLIK, Eduard, 73479 Ellwangen (DE); KREBS, Martin, 73494 Rosenberg (DE)
(74) Vertreter: Patentanwälte Ruff, Wilhelm, Beier, Dauster & Partner
(86) Internationale Anmeldenummer: PCT/EP2009/002364
(87) Internationale Veröffentlichungsnummer: WO 2009/121577

(56) Entgegenhaltungen:
- WO-A-2008/125246
- US-A- 4 248 944
- US-A- 4 282 293
- US-A- 4 503 133
- US-A- 5 837 398
- US-A1- 2008 003 493

## Beschreibung

Die Erfindung betrifft ein Verfahren zur Herstellung einer Knopfzelle und eine Knopfzelle, die gemäß diesem Verfahren herstellbar ist.

Galvanische Zellen in Knopfzellenform weisen in der Regel einen Zellenbecher und einen Zellendeckel auf. Der Zellenbecher kann beispielsweise aus vernickeltem Tiefziehblech als Stanzziehteil hergestellt werden. Gewöhnlich ist der Zellenbecher positiv und der Zellendeckel negativ gepolt. Derartige Knopfzellen können die verschiedensten elektrochemischen Systeme enthalten, beispielsweise Nickel/ Cadmium, Nickel/Metallhydrid, Zink/MnO₂ oder auch primäre und se-kundäre Lithium-Systeme.

Der flüssigkeitsdichte Verschluss solcher Zellen erfolgt in der Regel durch Umbördeln des Randes des Zellenbechers über den Zellendeckel. Ein zwischen Zellenbecher und Zellendeckel angeordneter Kunststoffring dient dabei in der Regel gleichzeitig als Dichtung und isoliert den Zellenbecher vom Zellendeckel. Derartige Knopfzellen sind beispielsweise aus der DE 3113309, der US-4,503,133 oder der WO 2008/125246 A2 bekannt.

Die für diese Knopfzellen erforderlichen Dichtungselemente werden klassisch im Spritzgussverfahren, beispielsweise aus Polyamiden, hergestellt. Die dazu notwendigen Spritzwerkzeuge sind sehr aufwendig und teuer. Darüber hinaus ist es praktisch nicht möglich, Dichtungselemente mit Wandungen in einer Dicke von weniger als 0,3 mm im Spritzgussverfahren herzustellen, so dass die bekannten Dichtungen insbesondere bei sehr kleinen Knopfzellen ein verhältnismäßig großes Volumen beanspruchen und damit die Kapazitätsausnutzung der Zelle beeinträchtigen.

In der DE 196 47 593 wird der Einsatz eines Dichtungselementes beschrieben, das durch Tiefziehen aus einer Folie hergestellt wird. Aus einer beheizten Folie wird mittels einer Ziehmatrize und eines Formstempels unter Vakuum ein becherförmiges Formteil gezogen. Im Bodenbereich des durch Tiefziehen hergestellten becherförmigen Formteils erfolgt anschließend eine Ausstanzung mittels eines Schnittstempels und einer Schnittbuchse. Das so hergestellte Dichtungselement wird auf einem Zellendeckel montiert, der dann in einem Zellenbecher eingesetzt werden kann. In Abhängigkeit der gewählten Verfahrensparameter lassen sich mit diesem Verfahren Dichtungselemente mit Wandstärken im Bereich zwischen 0,1 mm und 0,3 mm herstellen.

Eine Knopfzelle mit einem solchen Dichtungselement aus einer Folie bietet entsprechend im Hinblick auf die erzielbare Kapazitätsausnutzung gegenüber Knopfzellen mit Dichtungen aus Spritzgussteilen deutliche Vorteile. Nichtsdestotrotz ist es bei der Herstellung von galvanischen Zellen weiterhin ein Ziel, das für Aktivmaterial zur Verfügung stehende Innenvolumen der Zellen weiter zu optimieren.

Dieses Ziel konnte durch das Verfahren mit den Merkmalen des Anspruchs 1 erreicht werden. Bevorzugte Ausführungsformen des erfindungsgemäßen Verfahrens sind in den abhängigen Ansprüchen 2 bis 7 dargestellt. Die Ansprüche 8 und 9 betreffen eine Knopfzelle, die nach dem erfindungsgemäßen Verfahren herstellbar ist.

Ein erfindungsgemäßes Verfahren dient zur Herstellung von Knopfzellen. Dabei wird ein Zellengehäuse aus mehreren Teilen zusammengesetzt, wobei zur Abdichtung des Gehäuses an Stelle einer Spritzguss- oder Foliendichtung auf mindestens eines der Gehäuseteile mindestens ein reaktionsfähiger Polymervorläufer aufgebracht und ausgehärtet wird.

Der Begriff Polymervorläufer meint dabei alle ein- und mehrkomponentigen Systeme, aus denen Verbindungen mit polymerer Struktur herstellbar sind. Der mindestens eine Polymervorläufer kann sowohl reaktive Einzelmonomere als auch vorvernetzte Monomerkomponenten aufweisen. Vorzugsweise wird der mindestens eine Polymervorläufer in flüssiger Form, beispielsweise als Lack (s.u.), auf das mindestens eine Gehäuseteil aufgebracht, auch Abscheidungen aus der Gasphase sind aber möglich, worauf noch detaillierter eingegangen wird.

Im Unterschied zum Stand der Technik werden gemäß dem erfindungsgemäßen Verfahren zum Abdichten einer Knopfzelle also keine separaten Bauteile wie Folien- oder Spritzgussdichtungen mehr benötigt. Stattdessen wird eine polymere Schicht oder Beschichtung auf einem oder mehreren der Gehäuseteile geschaffen, die das Zellengehäuse wirksam abdichten kann. Dies hat offensichtliche Vorteile. So kann die aufwendige Herstellung von herkömmlichen Dichtungselementen über Spritzguss- oder Tiefziehprozesse ebenso entfallen wie deren Montage bei der Herstellung von galvanischen Zellen. Darüber hinaus lassen sich durch das Aufbringen und Aushärten des Polymervorläufers dichtende Schichten bzw. Beschichtungen herstellen, deren Dicke nur ein Bruchteil der Dicke bekannter Dichtungselemente beträgt. Darüber hinaus ist die Schichtdicke flexibel einstellbar.

Der mindestens eine Polymervorläufer wird derart auf das mindestens eine Gehäuseteil aufgebracht, dass er im zusammengesetzten Gehäuse eine Schicht im Kontaktbereich der Gehäuseteile, insbesondere zwischen den Gehäuseteilen, bildet. Insbesondere wird der mindestens eine Polymervorläufer derart aufgebracht, dass er nach dem Aushärten im zusammengesetzten Gehäuse eine Schicht bildet, die die Teile des Gehäuses voneinander isoliert. Der mindestens eine Polymervorläufer wird entsprechend so gewählt, dass er zumindest im ausgehärteten Zustand elektrisch isolierende Eigenschaften aufweist.

Daneben ist es in der Regel bevorzugt, dass der mindestens eine Polymervorläufer im ausgehärteten Zustand chemisch inert gegenüber gängigen Elektrolyten, insbesondere gegenüber wässrigen alkalischen Elektrolyten und/oder organischen Elektrolyten, insbesondere solchen auf Carbonatbasis, ist. Grundsätzlich eignet sich das erfindungsgemäße Verfahren nämlich zur Herstellung von Knopfzellen mit den unterschiedlichsten elektrochemischen Systemen, insbesondere von Nickel/Cadmium-, Zink-Luft-, NiMH- und Li-Zellen. Diese umfassen in der Regel stets mindestens eine positive Elektrode, mindestens eine negative Elektrode, mindestens einen Separator und einen Elektrolyten. Letzterer wird in Abhängigkeit des elektrochemischen Systems gewählt.

Wünschenswert kann es des weiteren sein, dass der mindestens eine Polymervorläufer im ausgehärteten Zustand hydrophobe Eigenschaften aufweist. Dies kann genutzt werden, um Korrosionsproblematiken an diesbezüglich besonders kritischen Bereichen des Zellengehäuses zu begegnen, worauf unten noch detaillierter eingegangen wird.

Im Hinblick auf die erforderliche Aushärtung des mindestens einen Polymervorläufers kann es bevorzugt sein, dass der mindestens eine Polymervorläufer thermisch und/oder durch Strahlung vernetzbar ist. Dem Polymervorläufer können daher Additive wie Vernetzer, Photoinitiatoren, Radikalstarter etc. zugesetzt sein. Bei diesen Additiven handelt es sich insbesondere um dem Fachmann bekannte Additive zur Einstellung und Stabilisierung der Eigenschaften von Lacken. Beispiele hierfür sind Photoinitiatoren wie z.B. α-Hydroxyalkylphenone oder Acylphosphinoxide.

Die erwähnten Vernetzer werden in der Regel in Abhängigkeit des verwendeten Bindemittels gewählt. Geeignete Vernetzer sind dem Fachmann jeweils bekannt.

Bevorzugt werden als Polymervorläufer Vorläufer für organische Polymere verwendet. Wie bereits kurz erwähnt, kann es sich dabei grundsätzlich um bekannte Lacksysteme wie Lacke auf Epoxid-, Polyester-, Polyacrylat-und/oder Polyurethanbasis handeln, sofern diese im ausgehärteten Zustand die angesprochenen, im Einzelfall ggf. erforderlichen Eigenschaften (elektrisch isolierende Eigenschaften, chemische Inertheit gegenüber gängigen Elektrolyten, hydrophobe Eigenschaften) aufweisen.

Besonders bevorzugt sind als Polymervorläufer jedoch Parylenevorläufer. Bei Parylene (Poly(para-ylylen)) handelt es sich bekanntlich um ein inertes, hydrophobes, optisch transparentes, polymeres Beschichtungsmaterial mit einem weiten industriellen Anwendungsspektrum. Parylene wird durch chemische Gasphasenabscheidung erzeugt. Das Ausgangsmaterial ist di-para-Xylylen oder ein halogeniertes Derivat davon. Dieses wird verdampft und durch eine Hochtemperaturzone geleitet. Dabei bildet sich ein hochreaktives Monomer (der Polymervorläufer im Sinne der vorliegenden Anmeldung), das auf der Oberfläche des zu beschichtenden Substrats in der Regel sofort zu einem kettenförmigen Polymer abreagiert. Zum Aushärten ist es hierbei lediglich erforderlich, das zu beschichtende Substrat auf einer nicht zu hohen Temperatur, beispielsweise Raumtemperatur, zu halten. Bevorzugt wird Parylene im Vakuum durch Kondensation aus der Gasphase als porenfreier und transparenter Polymerfilm auf ein Substrat aufgetragen. In einem Arbeitsgang können Beschichtungsdicken von 0,1 µm bis 50 µm aufgebracht werden.
In weiteren, besonders bevorzugten Ausführungsformen des erfindungsgemäßen Verfahrens kann als Polymervorläufer auch ein Vorläufer für ein anorganisch-organisches Copolymer, insbesondere ein Ormocervorläufer, aufgebracht werden.

Bei Ormoceren handelt es sich bekanntlich um eine relativ neue Klasse von Verbundwerkstoffen, die beispielsweise in der DE 100 16 324 beschrieben werden. Der Name ORMOCER® ist ein Kürzel fur "ORganically MOdified CERamics". Ormocere sind sehr gut zur Beeinflussung der Oberflächeneigenschaften von Substraten aller Art, beispielsweise von Polymeren, Keramik, Glas, Metall, Papier und Holz geeignet. Neben einer Erhöhung der mechanischen und chemischen Beständigkeit der Substrate lassen sich verschiedene zusätzliche Funktionen an der Oberfläche erzeugen. Unter anderem sind Ormocere sehr gut als Barriereschicht für Gase, Lösungsmittel und Ionen geeignet. Auch hydrophobe Eigenschaften lassen sich gezielt einstellen.

Die Herstellung dieser an Silicone erinnernden Polymere erfolgt nach einem Sol-Gel-Prozess in Anwesenheit sauerer oder basischer Katalysatoren. Ormocere sind dementsprechend anorganisch-organische Polymere. Bei dem Sol-Gel-Prozess wird durch gesteuerte Hydrolyse und Kondensation von organisch modifizierten Si-Alkoxiden zunächst ein anorganisches Netzwerk aufgebaut. Eine Cokondensation mit anderen Metallalkoxiden (z. B. Ti-, Zr- und Al-Alkoxiden) ist ebenfalls möglich. In einem nachfolgenden Schritt werden die am anorganischen Netzwerk fixierten polymerisierbaren Gruppen unter anderem thermisch und/oder UV-initiiert miteinander vernetzt. Außerdem können organisch modifizierte Si-Alkoxide eingesetzt werden, die keine organische Polymerisationsreaktionen eingehen und damit zu einer organischen Funktionalisierung des anorganischen Netzwerkes beitragen. Durch dieses zweistufige Verfahren wird ein anorganisch/organisches Copolymer aufgebaut. Dieses kann über ein übliches Beschichtungsverfahren (Tauch- oder Sprühverfahren, Rakelauftrag, Spin-on-Verfahren, Walzenauftrag oder Mikro-Sprühauftrag) auf ein Substrat aufgebracht werden, wo es in einem Anschlussschritt gehärtet werden kann.

Die Aushärtung des mindestens einen Polymervorläufers erfolgt im Rahmen des erfindungsgemäßen Verfahrens vorzugsweise nach dem Zusammensetzen des Gehäuses. Es ist allerdings auch möglich, den mindestens einen Polymervorläufer auf dem mindestens einen Gehäuseteil vor dem Zusammensetzen vorzuhärten und nach dem Zusammensetzen eine Endhärtung vorzunehmen. Das Härten selbst kann durch Strahlung und/oder thermisch erfolgen, wie bereits erwähnt. Das thermische Härten umfasst dabei nicht nur Härtungen, die bei Temperaturen oberhalb von Raumtemperatur erfolgen. Insbesondere kann darunter erfindungsgemäß auch ein Ruhenlassen des aufgebrachten mindestens einen Polymervorläufers bei einer bestimmten Temperatur, insbesondere bei Raumtemperatur, verstanden werden. Dies kann beispielsweise dann gelten, wenn als mindestens ein Polymervorläufer ein Parylene eingesetzt wird, das in der Regel bei Temperaturen < 35 °C ohne weiteres Zutun von alleine aushärten kann.

Das Zellengehäuse der Knopfzelle wird bei einem erfindungsgemäßen Verfahren vorzugsweise aus Metallteilen zusammengesetzt, insbesondere aus Teilen aus vernickeltem Stahl oder Blech. Weiterhin als metallischer Werkstoff geeignet sind z.B. Trimetalle, beispielsweise mit der Abfolge Nickel, Stahl (oder Edelstahl) und Kupfer (von außen nach innen).
Bei den in einem erfindungsgemäßen Verfahren zu verbauenden Gehäuseteilen handelt es sich in bevorzugten Fällen um einen Zellenbecher und einen Zellendeckel.

In diesen Fällen ist es besonders bevorzugt, dass der mindestens eine Polymervorläufer derart auf den Zellenbecher und/oder den Zellendeckel aufgebracht wird, dass er den Randbereich des Zellenbechers und/oder des Zellendeckels bedeckt.

Insbesondere der Randbereich von Zellenbechern und Zellendeckeln kann sehr korrosionsempfindlich sein. Bei Gehäuseteilen aus vernickeltem Stahl oder aus Trimetall liegen die korrosionsempfindlicheren Schichten in diesem Bereich (Schnittkante) offen und bieten korrosiven Medien ein hervorragendes Angriffsziel. Durch Aufbringen des mindestens einen Polymervorläufers in diesem Bereich wird dem vorgebeugt bzw. entgegengewirkt. In ausgehärtetem Zustand kann der mindestens eine Polymervorläufer dann eine bifunktionelle Schicht bilden, die zum einen dichtend, zum anderen korrosionsinhibierend wirkt.

Ebenfalls Gegenstand der vorliegenden Erfindung ist eine Knopfzelle, die ein mindestens zweiteiliges Gehäuse umfasst. Hergestellt wird die Knopfzelle vorzugsweise nach einem Verfahren nach einem der vorhergehenden Ansprüche. Das zweiteilige Gehäuse besteht aus einem Zellenbecher und einem Zellendeckel. Besonders zeichnet sich die erfindungsgemäße galvanische Zelle dadurch aus, dass das Gehäuse mittels eines elektrisch nichtleitenden Polymerfilms abgedichtet ist.

Besonders bevorzugt handelt es sich bei dem Polymerfilm um eine Beschichtung auf der Oberfläche von mindestens einem der Gehäuseteile. Der Polymerfilm ist vorzugsweise fest mit der Oberfläche von mindestens einem der Gehäuseteile verbunden, insbesondere derart, dass er durch mechanische Kräfte nicht zerstörungsfrei von dem mindestens einen Gehäuseteil ablösbar ist. Insbesondere ist der Polymerfilm chemisch (also über chemische Bindungen) an die Oberfläche des mindestens einen Gehäuseteils gebunden.

Eine erfindungsgemäße galvanische Zelle ist entsprechend frei von separaten Dichtungsbauteilen wie Folien- und Spritzgussdichtungen, deren Funktion von dem Polymerfilm übernommen wird.

Der Polymerfilm ist als Schicht oder Beschichtung, zwischen den Gehäuseteilen angeordnet und isoliert diese elektrisch voneinander. Bevorzugt ist die Schicht oder Beschichtung vorzugsweise zwischen der Außenseite des Zellendeckels und der Innenseite des Zellenbechers angeordnet (vorzugsweise über den gesamten Bereich des Gehäusemantels). In diesen bevorzugten Ausführungsformen ist der Polymerfilm also fest mit der Oberfläche von zwei Gehäuseteilen verbunden.

Wie bereits erwähnt, sind bei einem erfindungsgemäßen Verfahren die Schichtdicken der dichtenden Schichten oder Beschichtungen flexibel einstellbar. Der Polymerfilm in einer erfindungsgemäßen Knopfzelle weist eine Dicke von durchschnittlich zwischen 1 µm und 100 µm, vorzugsweise zwischen 1 µm und 50 µm, insbesondere zwischen 5 µm und 15 µm, auf. Dies liegt deutlich unter den aus dem Stand der Technik bekannten Dicken von Dichtungselementen für galvanische Zellen.

In weiteren bevorzugten Ausführungsformen einer erfindungsgemäßen Knopfzelle weist mindestens ein Teil des Zellengehäuses, insbesondere der Zellenbecher und/oder der Zellendeckel, einen Randbereich auf, der mit dem Polymerfilm bedeckt ist. Dadurch ist der Randbereich vor Korrosion geschützt, was ja oben bereits erläutert wurde.
Wie bereits oben angesprochen kann der Polymerfilm beispielsweise aus einem anorganisch-organischen Copolymer, insbesondere aus einem Ormocer, oder aus einem organischen Polymer, insbesondere aus einem Parylene, bestehen.

Die genannten und weitere Vorteile der Erfindung ergeben sich aus der nun folgenden Beschreibung der Zeichnung und den Beispielen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

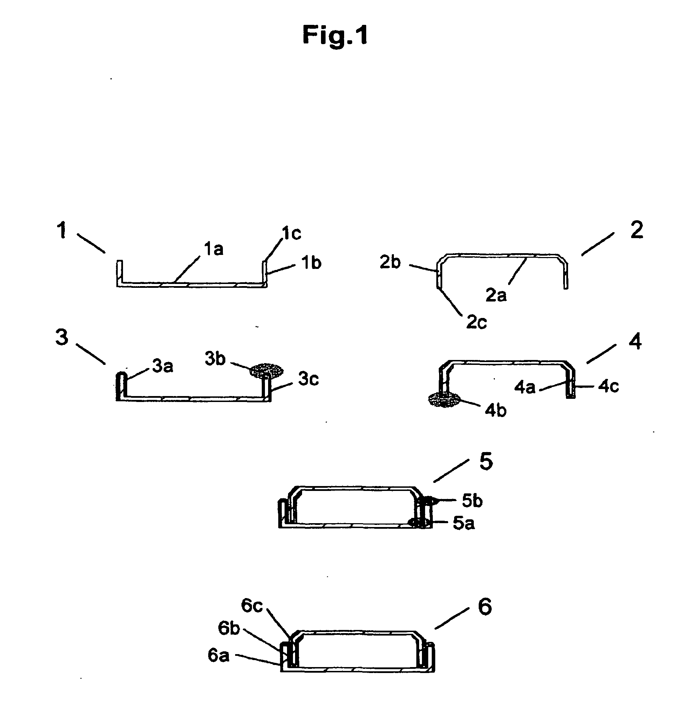

Fig. 1 illustriert schematisch das erfindungsgemäße Vorgehen bei der Herstellung einer Knopfzelle.

Ein Zellengehäuse wird aus einem Zellenbecher und einem Zellendeckel zusammengesetzt. Sowohl der Zellenbecher **1** als auch der Zellendeckel **2** weisen einen Boden (**1a** und **2a**) und einen daran angeschlossenen zylindrischen Mantel (**1b** und **2b**) auf. Am offenen Ende des Bechers und des Deckels sind der Becherrand **1 c** und der Deckelrand **2c** markiert. Zur Abdichtung des Gehäuses wird auf den Zellenbecher **1** und den Zellendeckel **2** eine dünne Schicht eines Polymervorläufers aufgebracht. Die mit der dünnen Schicht des Polymervorläufers versehenen Zellenbecher **3** und Zellendeckel **4** werden anschließend - insbesondere nach Aufnahme von Elektroden, Separator und Elektrolyt - zu dem Gehäuse **5** zusammengesetzt. Nach Aushärtung des Polymervorläufers wird das abgedichtete Gehäuse **6** erhalten.

Wie gut zu erkennen ist, wird der Polymervorläufer so auf den Zellenbecher und den Zellendeckel aufgebracht, dass er im zusammengesetzten Gehäuse eine Schicht (**6b**) bildet, welche die Teile des Gehäuses voneinander isoliert. Dazu wird der Polymervorläufer auf die Außenseite **3c** und die Innenseite **3a** des zylindrischen Mantels des Zellenbechers sowie auf die Außenseite **4c** und die Innenseite **4a** des zylindrischen Mantels des Zellendeckels aufgebracht. Insbesondere werden auch der Randbereich **3b** des Zellenbechers und der Randbereich **4b** des Zellendeckels mit dem Polymervorläufer beschichtet.

### Beispiele

Gehäusedeckel mit im Randabschnitt umgebogenem Rand, wie sie in der WO 2007/062838 beschrieben sind, wurden teilweise mit Parylene beschichtet. Beschichtet wurde zum einen jeweils die Aussenseite des zylindrisch ausgebildeten Abschnitts, zum anderen der Randabschnitt. Die Beschichtung erfolgte mittels einer üblichen Beschichtungsvorrichtung, wie sie beispielsweise von der Firma SCS Specialty Coating Systems in Indianapolis (Indiana, 46278 USA) erhältlich ist. Erfolgreich getestet wurden sowohl Beschichtungen mit Parylene C (monochlorsubstituiert) als auch mit anderen Parylenesorten, insbesondere auch mit Parylene D (dichlorsubstituiert) und Parylene HT (fluormodifiziert). Es wurden jeweils Knopfzellen erhalten, die den üblichen Anforderungen an Dichtigkeit in hervorragender Weise gerecht werden. Durch mikroskopische Untersuchungen konnte gezeigt werden, dass der dichtende Polymerfilm zwischen Zellenbecher und Zellendeckel dabei eine Dicke von weniger als 15 µm aufwies.

## Patentansprüche

1. Verfahren zur Herstellung einer Knopfzelle, bei dem ein Zellengehäuse (5; 6) aus mehreren Teilen (1, 2; 3, 4) zusammengesetzt wird, **dadurch gekennzeichnet, dass** zur Abdichtung des Gehäuses (5; 6) an Stelle einer Spritzguss- oder Foliendichtung auf mindestens eines der Gehäuseteile mindestens ein reaktionsfähiger Polymervorläufer aufgebracht und ausgehärtet wird, wobei der mindestens eine Polymervorläufer vor dem Zusammensetzen auf das mindestens eine Gehäuseteil aufgebracht wird und zwar derart, dass er im zusammengesetzten Gehäuse (5; 6) im Kontaktbereich der Gehäuseteile als Schicht (6b) zwischen den Gehäuseteilen angeordnet ist und die Gehäuseteile voneinander isoliert, wobei der Polymervorläufer derart ausgewählt wird, dass er im ausgehärteten Zustand elektrisch isolierende Eigenschaften aufweist.

2. Verfahren nach Anspruch 1, **dadurch gekennzeichnet, dass** der mindestens eine Polymervorläufer thermisch und/oder durch Strahlung vernetzbar ist.

3. Verfahren nach einem der vorhergehenden Ansprüche, **dadurch gekennzeichnet, dass** als Polymervorläufer ein Vorläufer von Poly(para-Xylylen) und/oder ein Vorläufer für ein anorganisch-organisches Copolymer aufgebracht wird.

4. Verfahren nach einem der vorhergehenden Ansprüche, **dadurch gekennzeichnet, dass** der mindestens eine Polymervorläufer nach dem Zusammensetzen des Gehäuses (5) ausgehärtet wird.

5. Verfahren nach einem der vorhergehenden Ansprüche, **dadurch gekennzeichnet, dass** das Zellengehäuse (5) aus Metallteilen zusammengesetzt wird.

6. Verfahren nach einem der vorhergehenden Ansprüche, **dadurch gekennzeichnet, dass** das Gehäuse aus einem Zellenbecher (1; 3) und einem Zellendeckel (2; 4) zusammengesetzt wird.

7. Verfahren nach Anspruch 6, **dadurch gekennzeichnet, dass** der mindestens eine Polymervorläufer derart auf den Zellenbecher (1; 3) und/oder den Zellendeckel (2; 4) aufgebracht wird, dass er den Randbereich des Zellenbechers und/oder des Zellendeckels bedeckt.

8. Knopfzelle, umfassend ein zweiteiliges Gehäuse (6) aus einem Zellenbecher (1; 3) und einem Zellendeckel (2; 4), **dadurch gekennzeichnet, dass** das Gehäuse (6) an Stelle einer Spritzgussoder Foliendichtung als Dichtung einen elektrisch nichtleitenden Polymerfilm aufweist, der als Schicht (6b) zwischen den Gehäuseteilen (1, 2; 3, 4) angeordnet ist und diese voneinander elektrisch isoliert, wobei der Polymerfilm eine Dicke von durchschnittlich zwischen 10 µm und 100 µm aufweist.

9. Knopfzelle nach Anspruch 8, **dadurch gekennzeichnet, dass** der Polymerfilm eine Dicke von durchschnittlich zwischen 30 µm und 50 µm aufweist.

## Claims

1. A process for producing a button cell, wherein a cell housing (5; 6) is assembled from a plurality of parts (1, 2; 3, 4), **characterized in that** instead of injection-molded seals or film seals, at least one reactive polymer precursor is applied to and cured on at least one of the housing parts to seal the housing (5; 6), wherein the at least one polymer precursor is applied on the at least one housing part before assembly, and in such a way that in the assembled housing (5; 6) it is arranged in the contact region of the housing parts as a layer (6b) between the housing parts to insulate the parts of the housing from another, wherein the at least one polymer precursor is selected so that it has electrically insulating properties in the cured state.

2. The process as claimed in claim 1, **characterized in that** the at least one polymer precursor can be cured thermally and/or by radiation.

3. The process as claimed in any of the preceding claims, **characterized in that** a precursor for poly(para-xylylene) and/or a precursor for an inorganic-organic copolymer is applied as polymer precursor.

4. The process as claimed in any of the preceding claims, **characterized in that** the at least one polymer precursor is cured after assembly of the housing (5).

5. The process as claimed in any of the preceding claims, **characterized in that** the cell housing (5) is assembled from metal parts.

6. The process as claimed in any of the preceding claims, **characterized in that** the housing is assembled from a cell cup (1; 3) and a cell lid (2; 4).

7. The process as claimed in claim 6, **characterized in that** the at least one polymer precursor is applied to the cell cup (1; 3) and/or the cell lid (2; 4) in such a way that it covers the edge region of the cell cup and/or the cell lid.

8. A button cell, comprising a two-part housing (6) made up of a cell cup (1; 3) and a cell lid (2; 4), **characterized in that** the housing (6) is sealed by means of an electrically nonconductive polymer film, instead of injection-molded seals or film seals, said polymer film being arranged as a layer (6b) between the housing parts (1, 2; 3, 4) and insulates these electrically from one another, wherein said polymer film has an average thickness of from 10 µm to 100 µm.

9. The button cell as claimed in claim 8, **characterized in that** the polymer film has an average thickness of from 30 µm to 50 µm.

## Revendications

1. Procédé de fabrication d'une pile bouton, un boîtier (5 ; 6) de pile étant composé de plusieurs parties (1, 2 ; 3, 4), **caractérisé en ce que** pour étanchéifier le boîtier (5 ; 6), en lieu et place d'un joint moulé par injection ou en feuille, au moins un précurseur de polymère apte à une réaction est appliqué et durci sur au moins une des parties du boîtier, ledit au moins un précurseur de polymère étant appliqué avant l'assemblage sur ladite au moins une partie de boîtier et ce de manière telle qu'il est disposé dans le boîtier assemblé (5 ; 6) dans la zone de contact des parties de boîtier sous forme de couche (6b) et isole les parties de boîtier l'une par rapport à l'autre, le précurseur de polymère étant choisi de manière telle qu'il présente, à l'état durci, des propriétés d'isolation électrique.

2. Procédé selon la revendication 1, **caractérisé en ce que** ledit au moins un précurseur de polymère est réticulable par voie thermique et/ou par un rayonnement.

3. Procédé selon l'une quelconque des revendications précédentes, **caractérisé en ce qu'**on applique comme précurseur de polymère un précurseur de poly(para-xylylène) et/ou un précurseur d'un copolymère inorganique-organique.

4. Procédé selon l'une quelconque des revendications précédentes, **caractérisé en ce que** le ledit au moins un précurseur de polymère est durci après l'assemblage du boîtier (5).

5. Procédé selon l'une quelconque des revendications précédentes, **caractérisé en ce que** le boîtier (5) de la pile est composé de parties métalliques.

6. Procédé selon l'une quelconque des revendications précédentes, **caractérisé en ce que** le boîtier est composé d'un fond (1 ; 3) de pile et d'un couvercle (2 ; 4) de pile.

7. Procédé selon la revendication 6, **caractérisé en ce que** ledit au moins un précurseur de polymère est appliqué sur le fond (1 ; 3) de pile et/ou le couvercle (2 ; 4) de pile de manière telle qu'il recouvre la zone de bord du fond et/ou du couvercle de pile.

8. Pile bouton, comprenant un boîtier (6) en deux parties, constitué par un fond (1 ; 3) de pile et un couvercle (2 ; 4) de pile, **caractérisée en ce que** le boîtier (6) présente, en lieu et place d'un joint moulé par injection ou en feuille, comme joint, un film polymère électriquement non conducteur, qui est disposé sous forme de couche (6b) entre les parties (1, 2 ; 3, 4) de boîtier et les isole électriquement l'une de l'autre, le film polymère présentant une épaisseur moyenne entre 10 µm et 100 µm.

9. Pile bouton selon la revendication 8, **caractérisée en ce que** le film polymère présente une épaisseur moyenne entre 30 µm et 50 µm.
